# FASCICULE DE BREVET EUROPEEN

(11) **EP 0 845 302 B1**
(45) Date de publication et mention de la délivrance du brevet: **24.07.2002**
(21) Numéro de dépôt: 97402703.9
(22) Date de dépôt: 13.11.1997
(51) Int. Cl.: B05D 7/04, B29C 53/04, B29D 11/00

(54) **Procédé de préparation d'une feuille en matière plastique, cette feuille et vitrage la comportant**
Verfahren zur Herstellung einer Kunststofffolie, die so hergestellte Kunststofffolie und Verglasung mittels dieser Kunststofffolie
Process for making a plastic sheet, the sheet produced and glazing made with the sheet

(30) Priorité: 26.11.1996 FR 9614403
(43) Date de publication de la demande: 03.06.1998
(73) Titulaire: SAINT-GOBAIN GLASS FRANCE, 92400 Courbevoie (FR)
(72) Inventeur: Bravet, Jean-Louis, 60150 Thourotte (FR); Bureau, Bernard, 60490 Marqueglise (FR); Didelot, Claude, 60150 Thourotte (FR); Morin, Claude, 92800 Puteaux (FR)
(74) Mandataire: Muller, René

(56) Documents cités:
- EP-A- 0 672 461
- EP-A- 0 718 348
- FR-A- 1 414 312

## Description

La présente invention a trait à la préparation de feuilles de matière plastique, notamment destinées à des applications dans lesquelles une excellente transparence, ou d'autres propriétés optiques, sont requises. Cela est le cas, par exemple, des vitrages dans le bâtiment ou les véhicules de transport, que l'on pourrait envisager de remplacer, du moins pour répondre à des exigences particulières, par des feuilles de matière plastique.

Par rapport au verre, les matières plastiques sont plus légères, ce qui constitue un avantage déterminant pour les véhicules urbains à moteur électrique, dans la mesure où une augmentation de leur autonomie est cruciale. Dans de tels véhicules, on pourrait même envisager de réaliser en matière plastique d'un seul bloc des portières entières, voire des côtés complets de la carrosserie, y compris les fenêtres, et d'en peindre éventuellement une partie inférieure. D'une manière générale, la légèreté des surfaces transparentes est intéressante relativement aux véhicules de transport modernes, dans la mesure où le progrès technique va de pair avec l'intégration au vitrage de fonctions toujours plus nombreuses (chauffage de lunette arrière, antenne radio, dégivrage du pare-brise, coloration pour empêcher le réchauffement de l'habitacle en cas de fort ensoleillement, incorporation de composés électrochromes, affichage d'informations sur le pare-brise...), et avec des surfaces vitrées sans cesse accrues. Il en résulte un alourdissement général du véhicule nuisible sur le plan de la consommation énergétique.

D'autre part, les matières plastiques sont susceptibles de procurer, par rapport au verre, des conditions de sécurité améliorées, et une protection contre le vol supérieure, du fait de leur résilience supérieure.

Un atout non moins important des matières plastiques par rapport au verre réside dans leur aptitude supérieure à être aisément transformées en formes complexes.

Enfin, l'aptitude des feuilles de matière plastique à être plus ou moins déformées de manière réversible, permet d'en envisager des modes d'installation dans les baies de carrosserie considérablement simplifiés, avec encliquetage, par l'intérieur comme par l'extérieur du véhicule.

A l'inverse, cette rigidité relativement faible qui vient d'être mentionnée constitue à l'évidence un handicap par rapport au verre, au même titre qu'une transparence et des propriétés optiques inférieures, et principalement, qu'une rayabilité supérieure.

Plusieurs approches ont jusqu'à présent été adoptées pour tenter de surmonter ce triple handicap.

Selon une première approche, on forme par extrusion des bandes planes de matière plastique, on découpe une pièce aux dimensions requises, on la fixe sur un dispositif de thermoformage, on procède au thermoformage par contact avec au moins une surface solide de moule et, éventuellement à l'aide d'air comprimé ou avec aspiration. Les propriétés optiques d'une feuille ainsi extrudée ne sont pas satisfaisantes.

Selon une seconde approche, on procède directement à l'injection de la matière plastique dans un moule de forme adaptée. La complexité de la fabrication des dispositifs d'injection est proportionnelle à celle des formes que l'on veut obtenir ; le coût de ces dispositifs s'en ressent. De plus, cette technique manque de souplesse, en ce sens que chaque forme de pièce à obtenir nécessite la mise en oeuvre d'un dispositif d'injection particulier. Qui plus est, lorsque des formes non sensiblement planes, plus que légèrement bombées, ou complexes de quelque autre manière que ce soit, sont visées, on observe une répartition inhomogène de la matière dans le moule, même en respectant rigoureusement les conditions opératoires optimales, telles que température/viscosité, pression. Cette inhomogénéité nuit aux propriétés optiques du produit.

Selon les deux approches ci-dessus, la mise en forme est effectuée par contact avec une surface solide, en général métallique. On retrouve bien entendu les imperfections de cette surface solide sur la matière plastique mise en forme. De ce fait, l'obtention de bonnes propriétés optiques est subordonnée à une opération de polissage de la surface du moule et/ou de la pièce moulée.

D'autre part, la rayabilité des matières plastiques, mentionnée précédemment, est telle que, dans leurs applications optiques ou en éléments transparents, il est nécessaire de revêtir les pièces mises en forme d'un vernis dur. Cette opération s'accompagne, de manière bien connue des spécialistes, de problèmes d'écaillage du vernis, plus sensibles dans le cas des surfaces de formes complexes. De plus, il a uniquement été envisagé de former le vernis dur à température inférieure à la température de déformation ou ramollissement de la matière plastique, dont la forme est ainsi intégralement préservée pendant cette opération. De telles conditions de formation du vernis sont excessivement contraignantes et ont suscité d'importants efforts pour élaborer des vernis se formant à des températures suffisamment basses et, parallèlement, des thermoplastiques à températures de ramollissement élevées.

Il subsistait donc le besoin d'un procédé d'obtention de pièces de matière plastique, notamment transparentes ou destinées à des applications optiques, dans lequel seraient évités la médiocre qualité optique inhérente à la technique de l'extrusion ou encore due à la mise en forme par contact avec des surfaces solides imparfaites, la répartition inhomogène de matière dans le moule d'injection, ainsi que le problème d'écaillage du vernis, et dans lequel de nombreux vernis pourraient être mis en oeuvre en association avec de nombreuses matières plastiques dans des conditions de compatibilité satisfaisantes.

Ces objectifs sont à présent réalisés par l'invention, qui a pour objet un procédé de préparation d'une feuille de matière plastique revêtue en totalité ou en partie d'un vernis dur, dans lequel on procède successivement à :
- la préparation par injection d'une feuille de matière plastique,
- l'application du vernis sur la feuille, et
- le chauffage de l'ensemble à une température au moins égale à la température de ramollissement de la matière plastique constituant la feuille, le vernis d'au moins une partie centrale dudit ensemble étant libre de tout autre contact mécanique que celui avec ladite matière plastique de ladite feuille.

En premier lieu, les atouts de l'injection par rapport à l'extrusion sur le plan des propriétés optiques sont ici mis à profit. Plus intéressante encore est la possibilité, ouverte par l'invention, de chauffer la matière plastique dans son domaine de ramollissement après l'application du vernis. Ceci permet d'associer les compositions de vernis durs les plus diverses, y compris les plus performantes connues à l'heure actuelle, avec de nombreux thermoplastiques courants, de températures de ramollissement relativement basses, et finalement peu chers. Il est connu que le traitement de la feuille, sur laquelle le vernis a été appliqué au préalable, à température relativement élevée est favorable à l'adhérence du vernis dur final et à sa résistance à l'abrasion avec perte minimale des qualités optiques dans le cas de feuilles transparentes. La caractéristique selon laquelle ce traitement a lieu en l'absence de tout autre contact du vernis d'une partie centrale au moins de la feuille avec un élément étranger que celui avec la feuille est, de plus, garante de la meilleure préservation possible d'éventuelles qualités optiques ; elle permet d'éviter la formation de bulles ou de craquelures pendant le durcissement du vernis.

Conformément à la présente invention, la troisième étape du procédé, qui consiste à chauffer ledit ensemble, peut être conduite selon deux variantes principales.

Selon la première, au moins une partie centrale non revêtue de vernis d'au moins une face de la feuille de matière plastique est en contact avec une surface apte à garantir les propriétés optiques requises du produit final, notamment avec une surface de verre.

Selon la seconde variante, la troisième étape est effectuée avec au moins une partie centrale de la feuille revêtue de vernis libre de tout contact mécanique, c'est-à-dire uniquement soumise à l'action de la gravité.

Selon un mode de réalisation excellent et particulièrement préféré, la feuille préparée à l'issue de la première étape d'injection, est sensiblement plane ou légèrement bombée. En effet, il est beaucoup plus aisé d'obtenir une surface de moule parfaitement polie pour de telles formes simples, ceci d'autant plus que la surface de la feuille est importante. Corrélativement, l'obtention de surfaces transparentes présentant de bonnes propriétés optiques est alors facilitée. Par ailleurs, l'injection, dans un premier temps, de la feuille selon une forme simple, pratiquement plane, garantit une répartition homogène de la matière dans le moule, également favorable du point de vue optique.

De plus, l'application du vernis est bien entendu plus aisée sur une surface quasiment plane que sur un substrat de forme plus complexe. Enfin, pour des éléments transparents latéraux de véhicules de transport, le même moule d'injection peut être utilisé pour la fabrication des éléments droits et des éléments gauches, selon des formes planes dans une première étape, une éventuelle opération ultérieure de bombage pouvant être précédée, selon les cas, d'une opération de retournement.

Selon un mode de réalisation préféré, la feuille de matière plastique revêtue au moins partiellement de vernis est maintenue, pendant l'étape de chauffage dans le domaine de ramollissement de la matière, sur appui périphérique et soumise à un bombage, de manière similaire à ce qui est couramment pratiqué pour le verre.

Les matières plastiques utilisables pour mettre en oeuvre l'invention sont, par exemple, le polycarbonate (PC) tel qu'obtenu notamment à partir de Bisphénol A ou de molécules aromatiques similaires, le poly(méthacrylate de méthyle) (PMMA), des copolymères acryliques, des copolymères d'éthylène tels qu'éthylène/dérivés acryliques (EDA), des polyesters thermoplastiques tels que le poly(téréphtalate d'éthylèneglycol) (PET).

Le procédé de l'invention comprend deux modes de réalisation distincts.

Selon le premier, le vernis est appliqué sur la feuille de matière plastique sous forme d'un précurseur liquide, puis éventuellement séché par application d'une température et/ou d'un rayonnement modérés, avant d'être durci en tous cas par chauffage à une température au moins égale à la température de ramollissement de la matière plastique. Aucun problème d'écaillage n'est à déplorer. On peut supposer que le vernis, plus ou moins liquide ou visqueux au fur et à mesure de son durcissement, épouse la forme de la feuille à l'état ramolli, qui se modifie le cas échéant progressivement jusqu'à sa forme définitive recherchée. Par conséquent, la mise en oeuvre de températures relativement élevées aurait pour résultat, outre de compléter des réactions chimiques telles que condensation et polymérisation du vernis, de créer en quelque sorte, selon cette première variante, un ancrage mécanique du vernis sur son substrat, tout en évitant toute craquelure ou tout écaillage de ce vernis.

Avantageusement, le vernis dur est alors constitué de réseaux de chaînes moléculaires minérales et organiques entremêlées et reliées les unes aux autres au moyen de liaisons silicium-carbone. Un tel vernis mixte présente d'excellentes propriétés de transparence, d'adhérence et de résistance aux rayures. Il semble que le réseau minéral confère au revêtement sa dureté et sa résistance aux rayures, le réseau organique son élasticité et sa résilience. De tels vernis sont bien connus et ont été décrits dans les demandes publiées EP-A1-0 524 417 et EP-A1-0 718 348 ; certains sont notamment désignés par la marque enregistrée « Ormocer » qui est l'abréviation de « Organically modified ceramic ».

Comme indiqué précédemment, on cherche, selon ce premier mode de réalisation, à faire coïncider la température de cuisson du vernis avec le domaine de ramollissement de la matière plastique. Dans le cas des Ormocers, la température de cuisson est aisément adaptable par variation des proportions relatives entre fraction polymère organique et fraction minérale. En ce qui concerne la matière plastique, on en connaît certains constituants susceptibles d'influencer les températures de ramollissement. Par exemple, la demande précitée EP-A1-0 718 348 décrit des copolycarbonates obtenus à partir de Bisphénol A et de diphénols fonctionnalisés par des groupements cycloalkyle tels que cyclohexyle : plus la fraction ainsi fonctionnalisée est importante, plus les températures de ramollissement sont élevées.

Le précurseur liquide du vernis peut être appliqué sur le substrat par flow coating, trempé notamment dans un bain de faible volume dans un souci d'économie, pulvérisation de liquide ou rideau. Le précurseur est constitué par exemple de dispersions colloïdales dans des solvants de plusieurs composés hybrides, c'est-à-dire à la fois organiques et minéraux, ou de polymères de faibles poids moléculaires fonctionnalisés par des groupements SiOR en mélange avec du tétraéthoxysilane. Le durcissement du vernis a alors lieu selon un procédé sol-gel, dans lequel le précurseur est d'abord séché, en passant par l'état intermédiaire d'un gel, par rayonnement ou chauffage modérés notamment, dans ce dernier cas, à moins de 50°C ; le durcissement est achevé par rayonnement ultraviolet, ou chauffage à des températures supérieures ou égales à 140°C, de préférence à 170°C et de façon particulièrement préférée à 180°C, et inférieures ou égales à 240°C, de préférence à 230°C et de façon particulièrement préférée à 200°C.

Particulièrement intéressante est l'addition, dans le vernis, d'agents anti-UV, anti-solaires et/ou de pigments de couleurs, de natures et en proportions habituelles bien connues des spécialistes.

Selon le second mode de réalisation de l'invention, le vernis dur est formé avant l'étape du procédé consistant à chauffer dans le domaine de ramollissement de la matière plastique.

Avantageusement, cette formation est effectuée à froid et/ou selon un dépôt assisté par plasma tel que CVD (Chemical Vapor Deposition) plasma. Lorsqu'il est procédé ultérieurement à un bombage de la feuille sur appui périphérique, il convient de choisir la composition chimique du vernis de telle sorte qu'il soit bombable. Dans ces conditions, on évite sans difficulté tout problème d'écaillage.

De préférence, le vernis utilisé dans ce second mode de réalisation est uniquement minéral et consiste notamment en polysiloxanes.

Conformément à la présente invention, des résultats particulièrement remarquables ont été obtenus à partir de vernis présentant un gradient de dureté, plus précisément une dureté croissante de la feuille de matière plastique constituant le substrat vers l'extérieur. Ce type de vernis a été confectionné par dépôt de couches successives de compositions différentes et/ou par variation progressive de la composition d'une unique couche de vernis au cours de son procédé de dépôt. Pour les Ormocers cités précédemment, une augmentation de la dureté correspond à une augmentation de la proportion des chaînes minérales par rapport à celle des chaînes organiques.

La technique de l'injection présente de nombreux avantages qui n'ont pas encore été explicités et ont suscité d'autres adaptations du procédé de l'invention.

Ainsi, selon une caractéristique avantageuse on forme pendant l'injection d'un objet consistant en une feuille munie d'une surépaisseur périphérique, constituant un « bourrelet ». Il est ainsi possible de conserver une rigidité prédéterminée en diminuant l'épaisseur, c'est-à-dire en réalisant éventuellement une réduction de poids et/ou une économie de matière.

D'autre part, l'injection permet avantageusement de former à la périphérie de la feuille un relief et/ou des prolongements tels que nervures, profilés, pattes ou oreilles, et/ou de disposer au sein de la matière plastique un ou plusieurs inserts, notamment métalliques. Cette disposition est particulièrement utile pour la préhension ou la fixation de la feuille lors de ses opérations de transformation subséquentes, par exemple lors de l'étape de chauffage, ainsi que pour le montage définitif auquel elle est destinée, comme dans une baie de carrosserie de véhicule automobile. Dans ce dernier cas, la formation de profilés périphériques adaptés permet d'envisager un montage de la feuille par l'intérieur du véhicule, c'est-à-dire par l'habitacle. Le cordon de colle est alors disposé sous le bord de la baie de carrosserie et n'est pas exposé aux rayons solaires. La protection du cordon de colle par un vernis formé à la périphérie de la face intérieure de la feuille devient naturellement superflue.

Les appendices formés à la périphérie de la feuille au cours de son injection peuvent être conservés, ou sciés en totalité ou en partie selon leur usage. Un ponçage peut être prévu après un tel sciage.

Un profilé périphérique de géométrie symétrique par rapport au plan de la feuille peut être opportun, par exemple dans le cas de surfaces transparentes latérales de véhicules de transport, l'une ou l'autre partie du profilé pouvant être sciée ultérieurement, selon qu'il s'agit de l'élément transparent droit ou gauche.

Par ailleurs, d'éventuels inserts peuvent être liés à l'incorporation dans la feuille de fonctions particulières, telles qu'un feu stop dans une lunette arrière.

La présente invention a également pour objet une feuille plane ou bombée transparente à base de matière plastique, de préférence de polycarbonate, munie sur une partie au moins d'au moins une de ses faces, d'un revêtement de vernis dur constitué de chaînes moléculaires minérales et organiques entremêlées et reliées les unes aux autres par des liaisons silicium-carbone, la feuille ayant été soumise après application du vernis, ou tout au moins d'un précurseur de celui-ci, à un chauffage à température au moins égale à la température de ramollissement de la matière plastique, en l'absence de tout autre contact mécanique d'une partie centrale au moins de la feuille que celui avec matière plastique de ladite feuille.

De préférence, l'épaisseur du revêtement de vernis dur est supérieure à 3 µm, de préférence à 5 µm tout en restant inférieure à 10 µm, de préférence à 8 µm.

La portée de l'invention s'étend d'autre part également à l'application de la feuille précédemment décrite en tant que pièce automobile comportant une partie transparente formant vitrage et en tant que vitrage automobile.

L'invention est maintenant illustrée par l'exemple suivant.

### EXEMPLE

On applique un vernis selon l'exemple de la demande publiée EP-A1-0 718 348, sur une feuille de polycarbonate préparé à partir de Bisphénol A et non, en particulier, de diphénols fonctionnalisés par des groupements cycloalkyle. Il s'agit d'un polycarbonate standard, non modifié, commercialisé par la Société BAYER AG sous la marque enregistrée « Makrolon », et dont la température de transition vitreuse T_{g} est égale à 145°C. La feuille a pour dimensions 105 x 150 x 3 mm. Après séchage, le film de vernis, identique à celui décrit dans la demande antérieure, a également 5 µm d'épaisseur.

On durcit le vernis à une température de 155°C pendant 30 min, la feuille étant simultanément maintenue sur appui périphérique et se déformant par bombage.

Les résultats des essais d'adhérence du film de vernis et de résistance à l'abrasion par évaluation de l'opacification (ASTM F 735) sont excellents, comparables à ceux décrits dans l'exemple de la demande antérieure pour un durcissement du vernis à 150°C pendant 30 min.

La transparence et la qualité optique de la feuille munie de son vernis dur sont tout à fait excellentes, à un degré encore jamais atteint auparavant.

Des résultats tout aussi remarquables ont été obtenus sur une feuille de copolycarbonate de Bisphénol A et de 1,1-bis-(4-hydroxyphényl)-3,3,5-triméthylcyclohexane également commercialisé par la société BAYER AG, sous la marque enregistrée «Apec HT », et de température de transition vitreuse T_{g} égale à 185°C. Les températures de durcissement s'élevaient alors jusqu'à 230°C.

## Revendications

1. Procédé de préparation d'une feuille de matière plastique revêtue d'un vernis dur sur au moins une partie d'au moins une de ses faces comprenant les étapes successives consistant à :
1) préparer par injection une feuille de matière plastique,
2) appliquer le vernis sur ladite feuille, et
3) chauffer l'ensemble à une température au moins égale à la température de ramollissement de la matière plastique constituant la feuille, le vernis d'au moins une partie centrale dudit ensemble étant libre de tout autre contact mécanique que celui avec ladite matière plastique de ladite feuille.

2. Procédé selon la revendication 1, **caractérisé en ce qu**'au cours de la troisième étape consistant à chauffer ledit ensemble, au moins une partie centrale non revêtue de vernis d'au moins une face de ladite feuille est en contact avec une surface apte à garantir les propriétés optiques requises du produit final, notamment avec une surface de verre.

3. Procédé selon la revendication 1, **caractérisé en ce qu**'au cours de la troisième étape consistant à chauffer ledit ensemble, au moins une partie centrale de celui-ci est libre de tout contact mécanique.

4. Procédé selon l'une des revendications 1 à 3, **caractérisé en ce que** la feuille préparée dans l'étape 1) est sensiblement plane ou légèrement bombée.

5. Procédé selon la revendication 4, **caractérisé en ce que,** pendant l'étape 3), la feuille de matière plastique est maintenue sur appui périphérique et soumise à un bombage.

6. Procédé selon l'une des revendication 1 à 5, **caractérisé en ce que** le vernis est appliqué sur la feuille de matière plastique au cours de l'étape 2) sous forme d'un précurseur liquide, qui est ensuite séché le cas échéant à température ou rayonnement adapté, le vernis étant finalement durci au cours de l'étape 3).

7. Procédé selon la revendication 6, **caractérisé en ce que** la nature du vernis et celle de la matière plastique sont choisies de telle sorte que les températures de durcissement du premier coïncident au moins en partie avec les températures de ramollissement de la seconde, à des valeurs supérieures ou égales à 140°C, de préférence à 170°C et de façon particulièrement préférée à 180°C, et inférieures ou égales à 240°C, de préférence à 230°C et de façon particulièrement préférée à 200°C.

8. Procédé selon la revendication 6, **caractérisé en ce que** le vernis contient, en tant qu'additifs, des agents anti-UV, anti-solaires et/ou des pigments de couleurs.

9. Procédé selon la revendication 6, **caractérisé en ce que** le vernis dur est constitué de réseaux de chaînes moléculaires minérales et organiques entremêlées et reliées les unes aux autres au moyen de liaisons silicium-carbone.

10. Procédé selon l'une des revendications 1 à 5, **caractérisé en ce que** le vernis dur est formé préalablement à l'étape 3).

11. Procédé selon la revendication 10, **caractérisé en ce que** le vernis dur est formé à froid et/ou selon un dépôt assisté par plasma tel que CVD plasma.

12. Procédé selon la revendication 11, **caractérisé en ce que** le vernis dur est exclusivement minéral, consistant notamment en polysiloxanes.

13. Procédé selon l'une des revendications 1 à 12, **caractérisé en ce que** le vernis du produit final présente un gradient de dureté croissant vers l'extérieur, obtenu par dépôt de couches successives de compositions différentes et/ou par variation progressive de la composition d'une unique couche de vernis au cours de son procédé de dépôt.

14. Procédé selon l'une quelconque des revendications 1 à 13, **caractérisé en ce que**, pendant l'étape 1) de préparation par injection de la feuille de matière plastique, on forme à la périphérie de la feuille des surépaisseurs de renfort mécanique, et/ou un relief et/ou des prolongements tels que nervures, profilés, pattes ou oreilles, et/ou on dispose au sein de la matière plastique un ou plusieurs inserts, notamment métalliques.

15. Feuille plane ou bombée transparente essentiellement constituée de matière plastique telle que du polycarbonate, revêtue d'un film de vernis dur constitué de réseaux de chaînes moléculaires minérales et organiques entremêlées et reliées les unes aux autres par des liaisons silicium-carbone et ayant été soumise après application du vernis, éventuellement sous forme d'un précurseur liquide, à un chauffage à température au moins égale à la température de ramollissement de la matière plastique, en l'absence de tout autre contact mécanique du vernis d'une partie centrale au moins de la feuille que celui avec ladite matière plastique de ladite feuille.

16. Feuille selon la revendication 15, **caractérisée en ce que** l'épaisseur du film de vernis dur est supérieure à 3 µm, de préférence à 5 µm et inférieure à 10 µm, de préférence à 8 µm.

17. Application d'une feuille selon la revendication 15 ou 16 en tant que pièce automobile comportant une partie transparente formant vitrage.

18. Application d'une feuille selon la revendication 15 ou 16 en tant que vitrage automobile.

## Patentansprüche

1. Verfahren zur Herstellung einer in mindestens einem Teil wenigstens einer Seite mit einem ausgehärteten Lack beschichteten Kunststoffscheibe, das die Stufen umfasst, die aus:
1) Herstellen einer Kunststoffscheibe durch Spritzgießen,
2) Aufbringen des Lacks auf dieser Scheibe und
3) Erwärmen des Ganzen auf eine Temperatur, die mindestens gleich der Erweichungstemperatur des die Scheibe bildenden Kunststoffs ist, wobei der Lack in wenigstens einem zentralen Teil des Ganzen keinen anderen mechanischen Kontakt als den mit dem Kunststoff der Scheibe hat,
bestehen.

2. Verfahren nach Anspruch 1, **dadurch gekennzeichnet, dass** in der dritten Stufe, die aus der Erwärmung des Ganzen besteht, wenigstens der nicht mit Lack beschichtete zentrale Teil mindestens einer Seite der Scheibe sich mit einer Fläche, insbesondere einer Glasfläche, in Kontakt befindet, die in der Lage ist, die optischen Eigenschaften zu gewährleisten, die vom Endprodukt verlangt werden.

3. Verfahren nach Anspruch 1, **dadurch gekennzeichnet, dass** in der dritten Stufe, die aus der Erwärmung des Ganzen besteht, wenigstens der zentrale Teil davon von einem mechanischen Kontakt frei ist.

4. Verfahren nach einem der Ansprüche 1 bis 3, **dadurch gekennzeichnet, dass** die in Stufe 1) hergestellte Scheibe im Wesentlichen plan oder leicht gebogen ist.

5. Verfahren nach Anspruch 4, **dadurch gekennzeichnet, dass** in Stufe 3) die Kunststoffscheibe auf einer Umfangsauflage gehalten und einem Biegevorgang unterworfen wird.

6. Verfahren nach einem der Ansprüche 1 bis 5, **dadurch gekennzeichnet, dass** der Lack in Stufe 2) in Form eines flüssigen Vorläufers, der anschließend gegebenenfalls durch eine geeignete Temperatur oder Strahlung getrocknet und schließlich in Stufe 3) ausgehärtet wird, auf die Kunststoffscheibe aufgebracht wird.

7. Verfahren nach Anspruch 6, **dadurch gekennzeichnet, dass** der Charakter von Lack und Kunststoff derart gewählt wird, dass die Aushärtungstemperaturen des ersten wenigstens teilweise mit den Erweichungstemperaturen des zweiten bei Werten von größer als oder gleich 140 °C, vorzugsweise 170 °C, und besonders bevorzugt 180 °C und kleiner als oder gleich 240 °C, vorzugsweise 230 °C, und besonders bevorzugt 200 °C übereinstimmen.

8. Verfahren nach Anspruch 6, **dadurch gekennzeichnet, dass** der Lack als Additive UV-Filter, Sonnenschutzmittel und/oder Farbpigmente enthält.

9. Verfahren nach Anspruch 6, **dadurch gekennzeichnet, dass** der ausgehärtete Lack aus Netzen aus anorganischen und organischen Molekülketten besteht, die einander durchdringen und durch Kohlenstoff-Silicium-Bindungen miteinander verknüpft sind.

10. Verfahren nach einem der Ansprüche 1 bis 5, **dadurch gekennzeichnet, dass** der ausgehärtete Lack vor Stufe 3) gebildet wird.

11. Verfahren nach Anspruch 10, **dadurch gekennzeichnet, dass** der ausgehärtete Lack in der Kälte und/oder durch eine plasmagestützte Beschichtung wie Plasma-CVD gebildet wird.

12. Verfahren nach Anspruch 11, **dadurch gekennzeichnet, dass** der ausgehärtete Lack ausschließlich anorganisch ist und insbesondere aus Polysiloxanen besteht.

13. Verfahren nach einem der Ansprüche 1 bis 12, **dadurch gekennzeichnet, dass** der Lack des fertigen Erzeugnisses einen nach außen zunehmenden Härtegradienten aufweist, der durch sukzessives Aufbringen von Schichten mit unterschiedlicher Zusammensetzung und/oder durch fortschreitende Veränderung der Zusammensetzung einer einzigen Lackschicht im Laufe ihres Beschichtungsverfahrens erhalten wird.

14. Verfahren nach einem der Ansprüche 1 bis 13, **dadurch gekennzeichnet, dass** in der Stufe 1) zur Herstellung der Kunststoffscheibe durch Spritzgießen am Scheibenumfang Überdicken für eine mechanische Verstärkung und/oder ein Relief und/oder Verlängerungen wie Rippen, Profile, Laschen oder Ösen gebildet werden und/oder im Kunststoff eine oder mehrere insbesondere metallische Einlagen angeordnet werden.

15. Scheibe, die transparent und plan oder gebogen ist, im Wesentlichen aus einem Kunststoff wie Polycarbonat besteht, der mit einer ausgehärteten Lackschicht beschichtet ist, die aus Netzen aus anorganischen und organischen Molekülketten gebildet ist, die einander durchdringen und durch Kohlenstoff-Silicium-Bindungen miteinander verknüpft sind, und nach Aufbringen des Lacks, gegebenenfalls in Form eines flüssigen Vorläufers, einer Erwärmung auf eine Temperatur, die mindestens gleich der Erweichungstemperatur des Kunststoffs ist, unterworfen worden ist, wobei kein weiterer mechanischer Kontakt des Lacks wenigstens eines zentralen Teils der Scheibe als derjenige mit dem Kunststoff dieser Scheibe besteht.

16. Scheibe nach Anspruch 15, **dadurch gekennzeichnet, dass** die Dicke der ausgehärteten Lackschicht mehr als 3 µm und vorzugsweise 5 µm und weniger als 10 µm und vorzugsweise 8 µm beträgt.

17. Verwendung einer Scheibe nach Anspruch 15 oder 16 als Autoteil, das einen transparenten Teil enthält, der eine Verglasung bildet.

18. Verwendung einer Scheibe nach Anspruch 15 oder 16 als Autoglas.

## Claims

1. Method of preparing a sheet of plastics material coated with a hard lacquer over at least part of at least one of its faces, comprising the successive steps consisting of:
1) preparing a sheet of plastics material by injection,
2) applying the lacquer to the said sheet, and
3) heating the assembly to a temperature at least equal to the softening temperature of the plastics material making up the sheet, the lacquer on at least a central part of the said assembly being free of any mechanical contact other than that with the said plastics material of the said sheet.

2. Method according to Claim 1, **characterised in that**, during the third step consisting of heating of the said assembly, at least a central part not coated with lacquer on at least one face of the said sheet is in contact with a surface able to guarantee the optical properties required of the final product, notably with a glass surface.

3. Method according to Claim 1, **characterised in that**, during the third step consisting of heating of the said assembly, at least a central part thereof is free of any mechanical contact.

4. Method according to one of Claims 1 to 3, **characterised in that** the sheet prepared in step 1) is substantially flat or slightly curved.

5. Method according to Claim 4, **characterised in that**, during step 3), the sheet of plastics material is held on a peripheral support and subjected to bending.

6. Method according to one of Claims 1 to 5, **characterised in that** the lacquer is applied to the sheet of plastics material during step 2) in the form of a liquid precursor, which is then dried where necessary at temperature or under suitable radiation, the lacquer finally being hardened during step 3).

7. Method according to Claim 6, **characterised in that** the nature of the lacquer and the nature of the plastics material are chosen so that the hardening temperatures of the first coincide at least partly with the softening temperatures of the second, at values greater than or equal to 140°C, preferably 170°C and in a particularly preferred fashion 180°C, and less than or equal to 240°C, preferably 230°C and in a particularly preferred manner 200°C.

8. Method according to Claim 6, **characterised in that** the lacquer contains, as additives, anti-UV agents, antisolar agents and/or colour pigments.

9. Method according to Claim 6, **characterised in that** the hard lacquer consists of lattices of intermingled mineral and organic molecular chains connected to each other by means of silicon-carbon bonds.

10. Method according to one of Claims 1 to 5, **characterised in that** the hard lacquer is formed prior to step 3).

11. Method according to Claim 10, **characterised in that** the hard lacquer is formed cold and/or according to a plasma-assisted deposition such as plasma CVD.

12. Method according to Claim 11, **characterised in that** the hard lacquer is exclusively mineral, consisting notably of polysiloxanes.

13. Method according to one of Claims 1 to 12, **characterised in that** the lacquer of the final product has a hardness gradient increasing towards the outside, obtained by the deposition of successive layers of different compositions and/or by progressive variation of the composition of a single layer of lacquer during its deposition process.

14. Method according to any one of Claims 1 to 13, **characterised in that**, during the step 1) of preparation by injection of the sheet of plastics material, thicker mechanical reinforcement parts are formed at the periphery of the sheet, and/or a relief and/or extensions such as ribs, profiled sections, lugs or brackets, and/or one or more inserts, notably metallic, are disposed within the plastics material.

15. Transparent flat or curved sheet consisting essentially of plastics material such as polycarbonate, coated with a film of hard lacquer consisting of lattices of intermingled mineral and organic molecular chains and connected to each other by silicon-carbon bonds and having been subjected, after application of the lacquer, possibly in the form of a liquid precursor, to a heating to a temperature at least equal to the softening temperature of the plastics material, in the absence of any mechanical contact of the lacquer in a central part at least of the sheet other than that with the said plastics material of the said sheet.

16. Sheet according to Claim 15, **characterised in that** the thickness of the film of hard lacquer is greater than 3 µm, preferably 5 µm and less than 10 µm, preferably 8 µm.

17. Application of a sheet according to Claim 15 or 16 as a motor car part having a transparent part forming glazing.

18. Application of a sheet according to Claim 15 or 16 as motor car glazing.
